# EUROPEAN PATENT SPECIFICATION

(11) **EP 4 726 604 B1**
(45) Date of publication and mention of the grant of the patent: **29.07.2026**
(21) Application number: 25202726.3
(22) Date of filing: 17.09.2025
(51) Int. Cl.: G06N 3/0442, G06N 3/045, G06N 3/08, G06N 7/01

(54) **SYSTEM AND METHOD FOR DESIGNING OPTIMUM MODIFIED ATMOSPHERE PACKAGING**
SYSTEM UND VERFAHREN ZUM ENTWERFEN EINER VERPACKUNG MIT OPTIMALER MODIFIZIERTER ATMOSPHÄRE
SYSTÈME ET PROCÉDÉ DE CONCEPTION D'EMBALLAGE SOUS ATMOSPHÈRE MODIFIÉE OPTIMALE

(30) Priority: 10.10.2024 IN 202421077052
(43) Date of publication of application: 15.04.2026
(73) Proprietor: Tata Consultancy Services Limited, Maharashtra (IN)
(72) Inventor: SACHANIA, Hitanshu Mitesh, 411057 Pune, Maharashtra (IN); KAPSE, Shrikant Arjunrao, 411057 Pune, Maharashtra (IN); KAUSLEY, Shankar Balajirao, 411057 Pune, Maharashtra (IN); RAI, Beena, Pittsburgh, Pennsylvania, 15213 (US)
(74) Representative: Goddar, Heinz J.

(56) References cited:
- EP-A1- 3 693 907
- PANDE HARSHVARDHAN ET AL: "Prediction of Shelf Life of Pearl Millet Flour Based on Rancidity and Nutritional Indicators Using a Long Short-Term Memory Network Model", vol. 4, no. 3, 1 March 2024 (2024-03-01), pages 786 - 795, XP093260617, ISSN: 2692-1944, Retrieved from the Internet <URL:https://pubs.acs.org/doi/pdf/10.1021/acsfoodscitech.4c00005> [retrieved on 20250318], DOI: 10.1021/acsfoodscitech.4c00005
- MOHI ALDEN KHALED ET AL: "Quality and shelf-life prediction of cauliflower under modified atmosphere packaging by using artificial neural networks and image processing", vol. 163, 1 August 2019 (2019-08-01), AMSTERDAM, NL, pages 104861, XP093053145, ISSN: 0168-1699, Retrieved from the Internet <URL:https://www.sciencedirect.com/science/article/pii/S0168169919303564> [retrieved on 20230609], DOI: 10.1016/j.compag.2019.104861
- AHMED ABDELRAHMAN R. ET AL: "Impact of Modified Atmosphere Packaging Conditions on Quality of Dates: Experimental Study and Predictive Analysis Using Artificial Neural Networks", vol. 12, no. 20, 17 October 2023 (2023-10-17), CH, pages 3811, XP093366775, ISSN: 2304-8158, Retrieved from the Internet <URL:https://www.mdpi.com/2304-8158/12/20/3811> [retrieved on 20260216], DOI: 10.3390/foods12203811

## Description

### CROSS-REFERENCE TO RELATED APPLICATIONS AND PRIORITY

The present application claims priority to Indian application no. 202421077052, filed on October 10, 2024.

### TECHNICAL FIELD

The disclosure herein generally relates to the field of supply chain management and, more particularly, to a method and system for designing optimum modified atmosphere packaging.

### BACKGROUND

Food spoilage contributes to food wastage in the world over years. Along a typical food supply chain, packaged food is subjected to various environmental conditions, from varying temperatures to varying humidity conditions. This poses a challenge in controlling the rate of spoilage or senescence in food. Over the years, various solutions have been developed to address this issue. Storing food in colder climates and moderate humidity helps extend its shelf-life. Even controlling the gaseous environment to which the food is exposed can help slow down the process of senescence. Technologies like controlled atmosphere storage were an initial push in this direction. Cold storage and nitrogen/argon environments became popular over time. Plastics have revolutionized industries and controlled atmosphere storage was no exception.

A type of packaging in which plastic films are used to control the flow of gases in/out of a food package, so that the gaseous environment and humidity around the food inside the package can be controlled is called modified atmosphere packaging (MAP). MAP has swiftly become an industry standard, and its market is growing at an abounding rate. MAP helps extend the shelf-life of food commodities across the supply-chain. MAP is not tailor-made for each combination of a particular commodity and particular supply-chain conditions. This lack of specificity leads to sub-optimal usage of MAP. Currently, there is no way to choose/design MAP on a case-by-case basis.

Conventional methods focus on predicting shelf-life of commodities for fixed storage conditions, and do not focus on the role of packaging. Some conventional approaches used visual (image) data of commodities to evaluate current quality parameter value of the commodity. They then combined storage data with the determined current quality parameter value and a pre-determined critical quality parameter value to predict the shelf-life of the commodity.

Generally, conventional approaches utilize 'one-size-fits-all' approach to select/design MAP. To study a MAP system, one must solve a coupled Ordinary Differential Equations (ODE) system, and to do so for a storage period in which temperature and relative humidity vary continuously is significantly time and compute-resource intensive. With recent advances in machine learning, especially with neural network architectures like the recurrent neural network which can learn temporal patterns in data, it has become possible to develop surrogate models that are far less resource intensive. However, less focus is given to such approaches.

### SUMMARY

The invention is defined by the independent claims. Embodiments of the present disclosure present technological improvements as solutions to one or more of the above-mentioned technical problems recognized by the inventors in conventional systems. For example, in one embodiment, a method for designing optimum modified atmosphere packaging is provided. The method includes receiving, via one or more hardware processors, a plurality of timeseries data pertaining to a storage environment of a product to be packed and a plurality of time invariant package data comprising a plurality of Modified Atmosphere Packaging (MAP) design parameters. Further, the method includes predicting, by the one or more hardware processors, a plurality of temporal vectors associated with the plurality of timeseries data using a Long Short Term Memory (LSTM) neural network layer. Furthermore, the method includes computing, by the one or more hardware processors, a plurality of design vectors based on the plurality of time invariant package data using a two layered Artificial Neural Network (ANN) stack. Furthermore, the method includes generating, by the one or more hardware processors, a concatenated prediction vectors based on the plurality of temporal vectors and the plurality of design vectors using a concatenation layer. Furthermore, the method includes predicting, by the one or more hardware processors, shelf-life period of the product to be packed based on the concatenated prediction vectors using a dense layer. Finally, the method includes computing, by the one or more hardware processors, a plurality of optimum package design parameters for maximum shelf-life based on predicted shelf-life period of the product and environmental storage parameters using Bayesian optimization algorithm.

In another aspect, a system for designing optimum modified atmosphere packaging is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a plurality of timeseries data pertaining to a storage environment of a product to be packed and a plurality of time invariant package data comprising a plurality of Modified Atmosphere Packaging (MAP) design parameters. Further, the one or more hardware processors are configured by the programmed instructions to predict a plurality of temporal vectors associated with the plurality of timeseries data using a Long Short Term Memory (LSTM) neural network layer. Furthermore, the one or more hardware processors are configured by the programmed instructions to compute a plurality of design vectors based on the plurality of time invariant package data using a two layered Artificial Neural Network (ANN) stack. Furthermore, the one or more hardware processors are configured by the programmed instructions to generate a concatenated prediction vectors based on the plurality of temporal vectors and the plurality of design vectors using a concatenation layer. Furthermore, the one or more hardware processors are configured by the programmed instructions to predict shelf-life period of the product to be packed based on the concatenated prediction vectors using a dense layer. Finally, the one or more hardware processors are configured by the programmed instructions to compute a plurality of optimum package design parameters for maximum shelf-life based on predicted shelf-life period of the product and environmental storage parameters using Bayesian optimization algorithm.

In yet another aspect, a computer program product including a non-transitory computer-readable medium embodied therein a computer program for designing optimum modified atmosphere packaging is provided. The computer readable program, when executed on a computing device, causes the computing device to receive a plurality of timeseries data pertaining to a storage environment of a product to be packed and a plurality of time invariant package data comprising a plurality of Modified Atmosphere Packaging (MAP) design parameters. Further, the computer readable program, when executed on a computing device, causes the computing device to predict a plurality of temporal vectors associated with the plurality of timeseries data using a Long Short Term Memory (LSTM) neural network layer. Furthermore, the computer readable program, when executed on a computing device, causes the computing device to compute a plurality of design vectors based on the plurality of time invariant package data using a two layered Artificial Neural Network (ANN) stack. Furthermore, the computer readable program, when executed on a computing device, causes the computing device to generate a concatenated prediction vectors based on the plurality of temporal vectors and the plurality of design vectors using a concatenation layer. Furthermore, the computer readable program, when executed on a computing device, causes the computing device to predict shelf-life period of the product to be packed based on the concatenated prediction vectors using a dense layer. Finally, the computer readable program, when executed on a computing device, causes the computing device to compute a plurality of optimum package design parameters for maximum shelf-life based on predicted shelf-life period of the product and environmental storage parameters using Bayesian optimization algorithm.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for designing optimum Modified Atmosphere Packaging (MAP), in accordance with some embodiments of the present disclosure.
FIG. 1B illustrates an example MAP packaging, in accordance with some embodiments of the present disclosure.
FIG. 2 illustrates a flow diagram for a processor implemented method for designing optimum modified atmosphere packaging, in accordance with some embodiments of the present disclosure.
FIG. 3 illustrates an overall machine learning architecture for designing optimum modified atmosphere packaging, in accordance with some embodiments of the present disclosure.
FIGS. 4A through 4E illustrate experimental results for the processor implemented method for designing optimum modified atmosphere packaging, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Food commodities are often stored in Modified Atmosphere Packaging (MAP) to extend their shelf-life. When it comes to choosing films used for modified atmosphere packaging, a one-size-fits-all sort of approach is employed in conventional approaches. This approach reduces the effectiveness of MAP, given all food commodities and all supply-chains, respectively, are different. Such sub-optimal use of MAP does not help extend the shelf-life of food commodities adequately, thereby failing in reducing food wastage. To maximize the benefits of MAP, the present disclosure provides a method and system for designing optimum MAP for a given food commodity and a given supply-chain.

To overcome the technical challenges in conventional approaches, embodiments herein provide a method and system for designing optimum modified atmosphere packaging. The present disclosure aids in designing an optimum MAP for a specific combination of any produce and any supply chain. Method of the present disclosure finds optimum MAP design parameters for a given product, for example, food commodity and given supply chain conditions using surrogate-assisted optimization, which is novel. Incorporation of the effect of varying storage conditions in the supply chain on the design of MAP is another point of novelty and a technological advance that hasn't been considered before. The optimal MAP design parameters include films material, thickness, number and size of holes for any storage conditions, varying temperature and relative humidity conditions, such that the shelf-life of the packaged food commodity can be maximized.

Further, the present disclosure utilizes physics-based models (a set of coupled-ordinary differential equations (ODE)) to simulate the system of MAP and generate data for shelf-life of the food commodity for various designs of MAP films stored in different environmental storage conditions. Further, this data is used to develop a hybrid recurrent neural network (RNN) and deep artificial neural network (ANN) model, which learns how the changes in storage conditions of temperature and relative humidity affect the shelf-life of the food commodity for different designs of MAP. While optimization of multiple ordinary differential equations is time and compute resource intensive, the developed hybrid model can be used as a surrogate which makes optimization significantly less resource intensive. A surrogate-assisted optimization model thus developed can be used to predict the optimum design of MAP for specific storage conditions.

The present disclosure includes a hybrid recurrent neural network (RNN) and deep artificial neural network (ANN) predictor model that takes environmental storage conditions like storage time, temperature, and relative humidity and MAP design parameters like material (permeability to gases like Oxygen (O₂), Carbon-di-Oxide (CO₂), and Water (H2_{O}), thickness of film), and pore distribution (number and size of pores) as input and returns shelf-life of stored food commodities as output. Further this predictor model is used within a Bayesian optimization routine to optimize the design of MAP for a given food commodity and given supply-chain conditions.

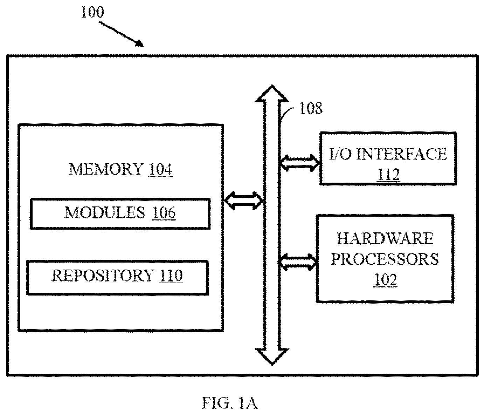

Referring now to the drawings, more particularly to FIG. 1A through FIG. 4E, where similar reference characters denote corresponding features consistently throughout the figures, there are shown preferred embodiments, and these embodiments are described in the context of the following exemplary system and/or method.

FIG. 1A is a functional block diagram of a system 100 for designing optimum modified atmosphere packaging, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Designing optimum modified atmosphere packaging. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for designing optimum modified atmosphere packaging.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS).

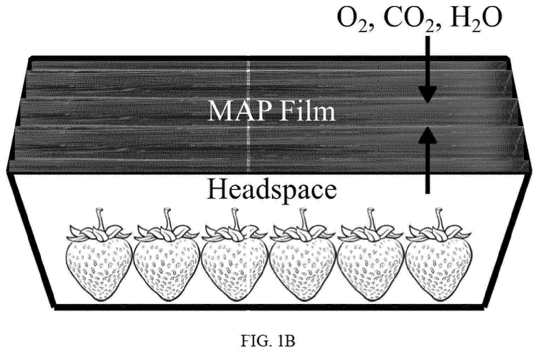

MAP films allow gases to diffuse through themselves at controlled rates. An example MAP film based packaging is shown in FIG. 1B. These rates are characterized by the property of these films called gas permeability. The film's material and its thickness affect gas permeabilities, which means MAP films can be tailored to specific use cases. Generally, oxygen (O₂), carbon dioxide (CO₂), moisture (H₂O), and ethylene (C₂H₄) gases are involved in the processes that lead to the loss of shelf-life in food commodities. MAP films can be designed to have specific values of permeabilities for each of these gases, which gives the user the ability to control amounts of these gases around the food inside the package. Moreover, holes of different sizes can be incorporated in MAP films to boost the exchange of certain gases between the package and the surrounding.

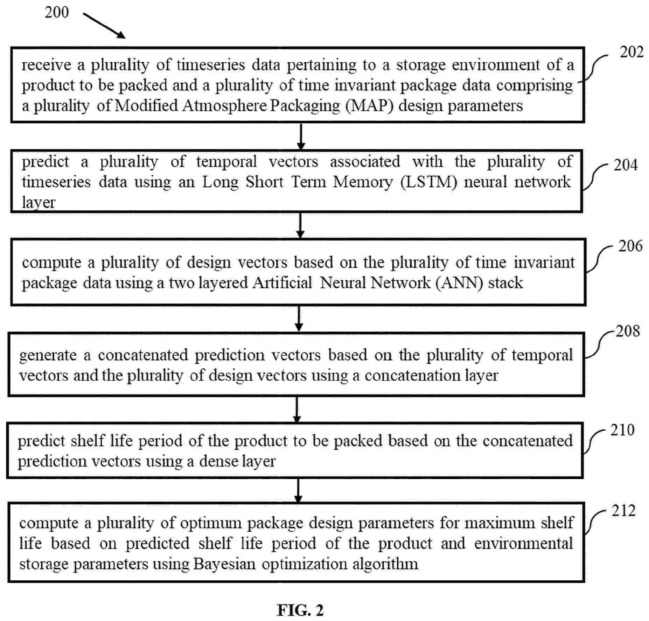

FIG. 2 is an exemplary flow diagram illustrating a method 200 for designing optimum modified atmosphere packaging implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of method 200, the one or more hardware processors 102 are configured by the programmed instructions to receive a plurality of timeseries data pertaining to a storage environment of a product to be packed and a plurality of time invariant package data comprising a plurality of Modified Atmosphere Packaging (MAP) design parameters. For example, the plurality of timeseries data includes environmental storage parameters like storage time, temperature, and relative humidity associated with the storage environment of the product to be packed. For example, the plurality of MAP design parameters includes a permeability to gases like O2, CO2, and H2O, a thickness of film and a pore distribution data, and wherein the pore distribution data comprises number of pores and size of pores.

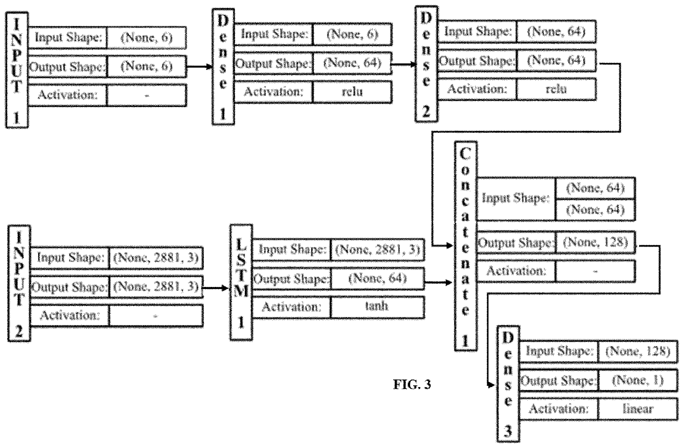

At step 204 of the method 200, the one or more hardware processors 102 is configured by the programmed instructions to predict a plurality of temporal vectors associated with the plurality of timeseries data using an LSTM neural network layer as shown in FIG. 3. For example, the LSTM neural network layer which has a total of 64 nodes with 17408 parameters, takes as input, the plurality of timeseries data in batches of 2881 timesteps and 3 features each, and outputs a plurality of temporal vectors per batch, each of size 64, that is constructed from the activations of each of the 64 nodes of the layer. The LSTM layer uses tanh as its activation function.

At step 206 of the method 200, the one or more hardware processors 102 is configured by the programmed instructions to compute a plurality of design vectors based on the plurality of time invariant package data using a two layered ANN stack shown in FIG. 3.

For example, the two layered ANN stack includes 64 nodes each, with 448 parameters in the first layer and 4160 parameters in the second layer, and ReLu activation in both, takes as input a plurality of time invariant packaging data in batches of 6 features each, and outputs a plurality of design vectors per batch, each of size 64.

At step 210 of the method 200, the one or more hardware processors 102 is configured by the programmed instructions to generate a concatenated prediction vectors based on the plurality of temporal vectors and the plurality of design vectors using a concatenation layer shown in FIG. 3. For example, the concatenation layer combines the outputs of the two layered ANN stack and the LSTM layer and outputs vectors of size 128 each, such that these outputted concatenated prediction vectors can further be used to predict shelf-life period of the packed product as affected by both, the time variant environmental storage data and the time invariant packaging data.

At step 212 of the method 200, the one or more hardware processors 102 is configured by the programmed instructions to predict shelf-life period of the product to be packed based on the concatenated prediction vectors using a dense layer shown in FIG. 3. The dense layer includes one node and a linear activation outputs the predicted shelf-life.

At step 214 of the method 200, the one or more hardware processors 102 is configured by the programmed instructions to compute a plurality of optimum package design parameters for maximum shelf-life based on predicted shelf-life period of the product and environmental storage parameters using Bayesian optimization algorithm. For example, the optimum plurality of package design parameters looks like specific values of MAP film permeabilities to gases O₂, CO₂, and H₂O, MAP film thickness, and number and diameter of pores in the MAP film for a maximal shelf-life of the food commodity to be stored in the MAP at specific environmental storage conditions across the supply-chain.

FIG. 3 illustrates an overall machine learning architecture for designing optimum modified atmosphere packaging in accordance with the embodiments of the present disclosure.

Given that the training data consists of sequential data in the form of time series of storage parameters (storage time, temperature, and relative humidity), recurrent neural networks (RNNs) were a natural choice. Shelf-life depends on the history of storage, and RNNs are capable of learning sequential patterns well. This ability of RNNs is utilized along with deep artificial neural networks (ANNs) to develop a hybrid model in which a Long Short Term Memory (LSTM) layer learns from the time series inputs of storage parameters and two layers of ANN learn from the scalar inputs of MAP design parameters.

Now referring to FIG. 3, FIG. 3 depicts the architecture of the hybrid model associated with the present disclosure. The model has 2 separate input layers, one for the MAP design parameters (INPUT 1) and the other for the storage parameters (INPUT 2). An LSTM layer (LSTM 1) then operates on the output of layer INPUT 2, whereas a stack of two ANN layers (DENSE 1 and DENSE 2) operates on the output of layer INPUT 1. The outputs of layers LSTM 1 and DENSE 2 are then passed to a concatenation layer (CONCAT 1), where they are combined. The output of the layer CONCAT 1 then goes to the final output dense layer (DENSE 3) which outputs the shelf-life of stored product.

Experimentation: The present disclosure was experimented with different scenarios and the output is explained below as use cases.

### Use case 1: Optimum design of the complete MAP

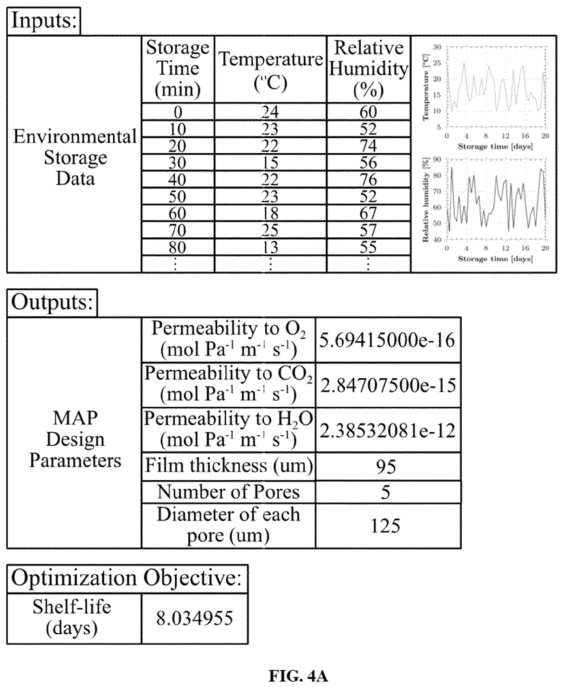

Given environmental storage data about temperature and relative humidity, an optimum design of MAP film material, thickness, number and size of pores can be obtained through the present disclosure. The output for use case 1 is shown in FIG. 4A.

### Use case 2:

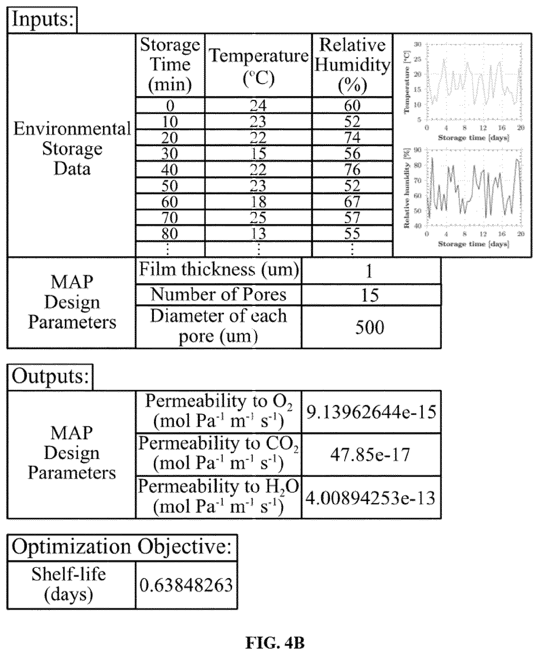

Optimum MAP material for fixed values of film thickness and pore distribution. Given environmental storage data about temperature and relative humidity, an optimum material for the MAP film for a fixed film thickness and fixed number and size of pores can be obtained through the present disclosure as shown in FIG. 4B.

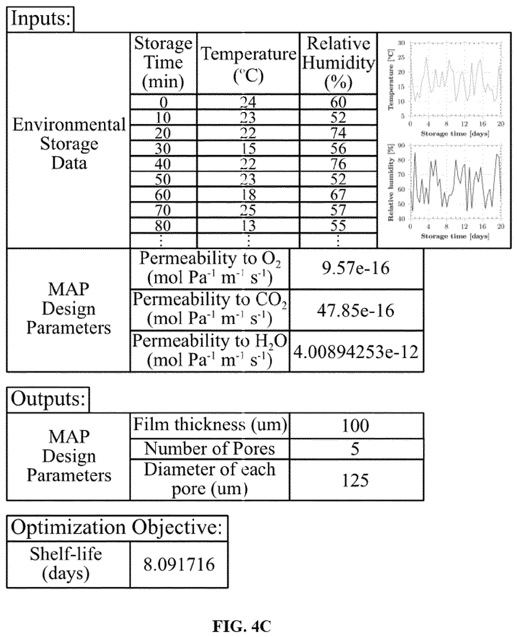

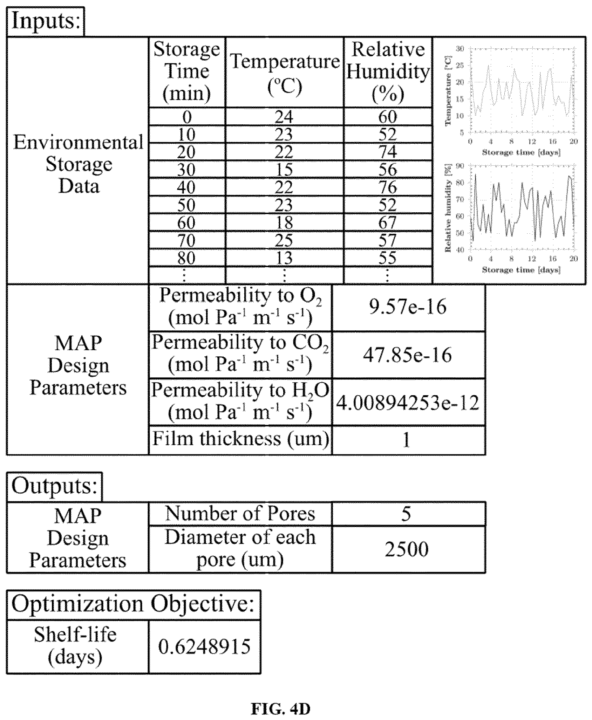

Use case 3: Optimum film thickness and pore distribution for a fixed value of MAP material:- Given environmental storage data about temperature and relative humidity, an optimum thickness and an optimum number and size of pores for a MAP film of fixed material can be obtained through the present disclosure as shown in FIG. 4C. Use case 4: Optimum pore distribution for fixed values of MAP material and film thickness: - Given environmental storage data about temperature and relative humidity, an optimum number and size of pores for a MAP film of fixed material and thickness can be obtained through the present disclosure as shown in FIG. 4D.

Data Curation: During training, the MAP system was modelled with the physics-based model. For various MAP design parameters, the mass loss and respiration-based shelf-life of the strawberries were calculated corresponding to various storage conditions.

Storage parameter values used for experimentation: Storage time, temperature, and relative humidity are in sequences of 20 days, with each value 10 minutes apart. Temperature and relative humidity were varied in the ranges 10° to 25°C and 45 to 85%, respectively. These ranges were chosen since most supply chains tend to operate in these ranges. The MAP design parameters, on the other hand, are static with scalar values. Their values, too, were varied in the ranges of commonly observed values.

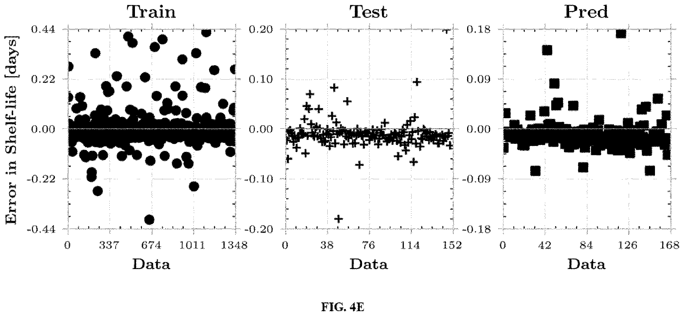

Training history and model accuracy are depicted in the FIG. 4E. The lack of any pattern in the error distribution across the dataset shows the trained model is unbiased.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of designing optimum modified atmosphere packaging. The method of the present disclosure selectively computes optimum MAP design parameters for a given food commodity and given supply chain conditions using surrogate-assisted optimization. Incorporation of the effect of varying storage conditions in the supply chain on the design of MAP is another point of novelty and a technological advance that hasn't been considered before. The optimal MAP design parameters include films material, thickness, number and size of pores, for any storage conditions, varying temperature and relative humidity conditions such that the shelf-life of the packaged food commodity can be maximized.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), the method comprising:
receiving (202), by one or more hardware processors, a plurality of timeseries data pertaining to a storage environment of a product to be packed and a plurality of time invariant package data comprising a plurality of Modified Atmosphere Packaging (MAP) design parameters,
predicting (204), by the one or more hardware processors, a plurality of temporal vectors associated with the plurality of timeseries data using a Long Short Term Memory (LSTM) neural network layer;
computing (206), by the one or more hardware processors, a plurality of design vectors based on the plurality of time invariant package data using a two layered Artificial Neural Network (ANN) stack;
generating (208), by the one or more hardware processors, concatenated prediction vectors based on the plurality of temporal vectors and the plurality of design vectors using a concatenation layer;
predicting (210), by the one or more hardware processors, a shelf-life period of the product to be packed based on the concatenated prediction vectors using a dense layer; and
computing (212), by the one or more hardware processors, a plurality of optimum Modified Atmosphere Packaging (MAP) design parameters for maximum shelf-life based on the predicted shelf-life period of the product and environmental storage parameters using Bayesian optimization algorithm.

2. The method as claimed in claim 1, wherein the plurality of MAP design parameters comprises a permeability to gases like Oxygen (O₂), Carbon-di-Oxide (CO₂), and Water (H₂O), a thickness of film and a pore distribution data, and wherein the pore distribution data comprises number of pores and size of pores.

3. The method as claimed in claim 1, wherein the plurality of timeseries data comprises storage time, temperature, and relative humidity associated with the storage environment of the product to be packed.

4. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive a plurality of timeseries data pertaining to a storage environment of a product to be packed and a plurality of time invariant package data comprising a plurality of Modified Atmosphere Packaging (MAP) design parameters,
predict a plurality of temporal vectors associated with the plurality of timeseries data using a Long Short Term Memory (LSTM) neural network layer;
compute a plurality of design vectors based on the plurality of time invariant package data using a two layered Artificial Neural Network (ANN) stack;
generate concatenated prediction vectors based on the plurality of temporal vectors and the plurality of design vectors using a concatenation layer;
predict a shelf-life period of the product to be packed based on the concatenated prediction vectors using a dense layer; and
compute a plurality of optimum Modified Atmosphere Packaging (MAP) design parameters for maximum shelf-life based on the predicted shelf-life period of the product and environmental storage parameters using Bayesian optimization algorithm.

5. The system of claim 4, wherein the plurality of MAP design parameters comprises a permeability to gases like Oxygen (O₂), Carbon-di-Oxide (CO₂), and Water (H₂O), a thickness of film and a pore distribution data, and wherein the pore distribution data comprises number of pores and size of pores.

6. The system of claim 4, wherein the plurality of time series data comprises storage time, temperature, and relative humidity associated with the storage environment of the product to be packed.

7. One or more non-transitory machine-readable information storage mediums comprising one or more instructions which when executed by one or more hardware processors cause:
receiving, a plurality of timeseries data pertaining to a storage environment of a product to be packed and a plurality of time invariant package data comprising a plurality of Modified Atmosphere Packaging (MAP) design parameters,
predicting, a plurality of temporal vectors associated with the plurality of timeseries data using a Long Short Term Memory (LSTM) neural network layer;
computing, a plurality of design vectors based on the plurality of time invariant package data using a two layered Artificial Neural Network (ANN) stack;
generating, concatenated prediction vectors based on the plurality of temporal vectors and the plurality of design vectors using a concatenation layer;
predicting, a shelf-life period of the product to be packed based on the concatenated prediction vectors using a dense layer; and
computing, a plurality of optimum Modified Atmosphere Packaging (MAP) design parameters for maximum shelf-life based on the predicted shelf-life period of the product and environmental storage parameters using Bayesian optimization algorithm.

8. The one or more non-transitory machine-readable information storage mediums of claim 7, wherein the plurality of MAP design parameters comprises a permeability to gases like Oxygen (O2), Carbon-di-Oxide (CO2), and Water (H2O), a thickness of film and a pore distribution data, and wherein the pore distribution data comprises number of pores and size of pores.

9. The one or more non-transitory machine-readable information storage mediums of claim 7, wherein the plurality of timeseries data comprises storage time, temperature, and relative humidity associated with the storage environment of the product to be packed.

## Patentansprüche

1. Prozessorimplementiertes Verfahren (200), wobei das Verfahren Folgendes umfasst:
Empfangen (202), durch einen oder mehrere Hardwareprozessoren, einer Mehrzahl von Zeitplandaten, die sich auf eine Lagerumgebung eines zu verpackenden Produkts beziehen, und einer Mehrzahl von zeitinvarianten Paketdaten, die eine Mehrzahl von Designparametern für modifiziertes Atmosphärenverpacken (MAP) umfassen,
Vorhersagen (204), durch den einen oder die mehreren Hardwareprozessoren, einer Mehrzahl von zeitlichen Vektoren, die der Mehrzahl von Zeitplandaten zugeordnet sind, unter Verwendung einer neuronalen Netzwerkschicht mit langem Kurzzeitspeicher (LSTM);
Berechnen (206), durch den einen oder die mehreren Hardwareprozessoren, einer Mehrzahl von Designvektoren basierend auf der Mehrzahl von zeitinvarianten Paketdaten unter Verwendung eines zweischichtigen Stapels eines künstlichen neuronalen Netzwerks (ANN);
Erzeugen (208), durch den einen oder die mehreren Hardwareprozessoren, von verketteten Vorhersagevektoren basierend auf der Mehrzahl von zeitlichen Vektoren und der Mehrzahl von Designvektoren unter Verwendung einer Verkettungsschicht;
Vorhersagen (210), durch den einen oder die mehreren Hardwareprozessoren, einer Haltbarkeitsdauer des zu verpackenden Produkts basierend auf den verketteten Vorhersagevektoren unter Verwendung einer dichten Schicht; und
Berechnen (212), durch den einen oder die mehreren Hardwareprozessoren, einer Mehrzahl von optimalen Designparametern für modifiziertes Atmosphärenverpacken (MAP) für maximale Haltbarkeit basierend auf der vorhergesagten Haltbarkeitsdauer des Produkts und Umgebungslagerparametern unter Verwendung eines Bayes'schen Optimierungsalgorithmus.

2. Verfahren nach Anspruch 1, wobei die Mehrzahl von MAP-Designparametern eine Durchlässigkeit für Gase wie Sauerstoff (O₂), Kohlenstoffdioxid (CO₂) und Wasser (H₂O), eine Filmdicke und Porenverteilungsdaten umfasst, und wobei die Porenverteilungsdaten die Anzahl von Poren und die Größe von Poren umfassen.

3. Verfahren nach Anspruch 1, wobei die Mehrzahl von Zeitplandaten Lagerzeit, Temperatur und relative Feuchtigkeit umfasst, die mit der Lagerumgebung des zu verpackenden Produkts assoziiert sind.

4. System (100), umfassend:
mindestens einen Speicher (104), der programmierte Anweisungen speichert; eine oder mehrere Eingabe/Ausgabe-Schnittstellen (I/O-Schnittstellen) (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:
Empfangen einer Mehrzahl von Zeitplandaten, die sich auf eine Lagerumgebung eines zu verpackenden Produkts beziehen, und einer Mehrzahl von zeitinvarianten Paketdaten, die eine Mehrzahl von Designparametern für modifiziertes Atmosphärenverpacken (MAP) umfassen,
Vorhersagen einer Mehrzahl von zeitlichen Vektoren, die der Mehrzahl von Zeitplandaten zugeordnet sind, unter Verwendung einer neuronalen Netzwerkschicht mit langem Kurzzeitspeicher (LSTM);
Berechnen einer Mehrzahl von Designvektoren basierend auf der Mehrzahl von zeitinvarianten Paketdaten unter Verwendung eines zweischichtigen Stapels eines künstlichen neuronalen Netzwerks (ANN);
Erzeugen von verketteten Vorhersagevektoren basierend auf der Mehrzahl von zeitlichen Vektoren und der Mehrzahl von Designvektoren unter Verwendung einer Verkettungsschicht;
Vorhersagen einer Haltbarkeitsdauer des zu verpackenden Produkts basierend auf den verketteten Vorhersagevektoren unter Verwendung einer dichten Schicht; und
Berechnen einer Mehrzahl von optimalen Designparametern für modifiziertes Atmosphärenverpacken (MAP) für maximale Haltbarkeit basierend auf der vorhergesagten Haltbarkeitsdauer des Produkts und Umgebungslagerparametern unter Verwendung eines Bayes'schen Optimierungsalgorithmus.

5. System nach Anspruch 4, wobei die Mehrzahl von MAP-Designparametern eine Durchlässigkeit für Gase wie Sauerstoff (O₂), Kohlenstoffdioxid (CO₂) und Wasser (H₂O), eine Filmdicke und Porenverteilungsdaten umfasst, und wobei die Porenverteilungsdaten die Anzahl von Poren und die Größe von Poren umfassen.

6. System nach Anspruch 4, wobei die Mehrzahl von Zeitreihendaten Lagerzeit, Temperatur und relative Feuchtigkeit umfasst, die mit der Lagerumgebung des zu verpackenden Produkts assoziiert sind.

7. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:
Empfangen einer Mehrzahl von Zeitplandaten, die sich auf eine Lagerumgebung eines zu verpackenden Produkts beziehen, und einer Mehrzahl von zeitinvarianten Paketdaten, die eine Mehrzahl von Designparametern für modifiziertes Atmosphärenverpacken (MAP) umfassen,
Vorhersagen einer Mehrzahl von zeitlichen Vektoren, die der Mehrzahl von Zeitplandaten zugeordnet sind, unter Verwendung einer neuronalen Netzwerkschicht mit langem Kurzzeitspeicher (LSTM);
Berechnen einer Mehrzahl von Designvektoren basierend auf der Mehrzahl von zeitinvarianten Paketdaten unter Verwendung eines zweischichtigen Stapels eines künstlichen neuronalen Netzwerks (ANN);
Erzeugen von verketteten Vorhersagevektoren basierend auf der Mehrzahl von zeitlichen Vektoren und der Mehrzahl von Designvektoren unter Verwendung einer Verkettungsschicht;
Vorhersagen einer Haltbarkeitsdauer des zu verpackenden Produkts basierend auf den verketteten Vorhersagevektoren unter Verwendung einer dichten Schicht; und
Berechnen einer Mehrzahl von optimalen Designparametern für modifiziertes Atmosphärenverpacken (MAP) für maximale Haltbarkeit basierend auf der vorhergesagten Haltbarkeitsdauer des Produkts und Umgebungslagerparametern unter Verwendung eines Bayes'schen Optimierungsalgorithmus.

8. Ein oder mehrere nichtflüchtige maschinenlesbare Informationsspeichermedien nach Anspruch 7, wobei die Mehrzahl von MAP-Designparametern eine Durchlässigkeit für Gase wie Sauerstoff (O2), Kohlenstoffdioxid (CO2) und Wasser (H2O), eine Filmdicke und Porenverteilungsdaten umfasst, und wobei die Porenverteilungsdaten die Anzahl von Poren und die Größe von Poren umfassen.

9. Ein oder mehrere nichtflüchtige maschinenlesbare Informationsspeichermedien nach Anspruch 7, wobei die Mehrzahl von Zeitplandaten Lagerzeit, Temperatur und relative Feuchtigkeit umfasst, die mit der Lagerumgebung des zu verpackenden Produkts assoziiert sind.

## Revendications

1. Procédé mis en œuvre par processeur (200), le procédé comprenant :
la réception (202), par un ou plusieurs processeurs matériels, d'une pluralité de données de séries temporelles relatives à un environnement de stockage d'un produit à emballer et d'une pluralité de données d'emballage invariantes dans le temps comprenant une pluralité de paramètres de conception d'emballage à atmosphère modifiée (MAP),
la prédiction (204), par les un ou plusieurs processeurs matériels, d'une pluralité de vecteurs temporels associés à la pluralité de données de séries temporelles à l'aide d'une couche de réseau neuronal à mémoire à court terme long (LSTM) ;
le calcul (206), par les un ou plusieurs processeurs matériels, d'une pluralité de vecteurs de conception sur la base de la pluralité de données d'emballage invariantes dans le temps à l'aide d'une pile de réseau neuronal artificiel (ANN) à deux couches ;
la génération (208), par les un ou plusieurs processeurs matériels, de vecteurs de prédiction concaténés sur la base de la pluralité de vecteurs temporels et de la pluralité de vecteurs de conception à l'aide d'une couche de concaténation ;
la prédiction (210), par les un ou plusieurs processeurs matériels, d'une durée de conservation du produit à emballer sur la base des vecteurs de prédiction concaténés à l'aide d'une couche dense ; et
le calcul (212), par les un ou plusieurs processeurs matériels, d'une pluralité de paramètres de conception d'emballage à atmosphère modifiée (MAP) optimaux pour une durée de conservation maximale sur la base de la durée de conservation prédite du produit et de paramètres de stockage environnementaux à l'aide d'un algorithme d'optimisation bayésienne.

2. Procédé selon la revendication 1, dans lequel la pluralité de paramètres de conception MAP comprend une perméabilité à des gaz tels que l'oxygène (O₂), le dioxyde de carbone (CO₂) et l'eau (H₂O), une épaisseur de film et des données de distribution de pores, et dans lequel les données de distribution de pores comprennent le nombre de pores et la taille de pores.

3. Procédé selon la revendication 1, dans lequel la pluralité de données de séries temporelles comprend le temps de stockage, la température et l'humidité relative associés à l'environnement de stockage du produit à emballer.

4. Système (100) comprenant :
au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :
recevoir une pluralité de données de séries temporelles relatives à un environnement de stockage d'un produit à emballer et une pluralité de données d'emballage invariantes dans le temps comprenant une pluralité de paramètres de conception d'emballage à atmosphère modifiée (MAP),
prédire une pluralité de vecteurs temporels associés à la pluralité de données de séries temporelles à l'aide d'une couche de réseau neuronal à mémoire à court terme long (LSTM) ;
calculer une pluralité de vecteurs de conception sur la base de la pluralité de données d'emballage invariantes dans le temps à l'aide d'une pile de réseau neuronal artificiel (ANN) à deux couches ;
générer des vecteurs de prédiction concaténés sur la base de la pluralité de vecteurs temporels et de la pluralité de vecteurs de conception à l'aide d'une couche de concaténation ;
prédire une durée de conservation du produit à emballer sur la base des vecteurs de prédiction concaténés à l'aide d'une couche dense ; et
calculer une pluralité de paramètres de conception d'emballage à atmosphère modifiée (MAP) optimaux pour une durée de conservation maximale sur la base de la durée de conservation prédite du produit et de paramètres de stockage environnementaux à l'aide d'un algorithme d'optimisation bayésienne.

5. Système selon la revendication 4, dans lequel la pluralité de paramètres de conception MAP comprend une perméabilité à des gaz tels que l'oxygène (O₂), le dioxyde de carbone (CO₂) et l'eau (H₂O), une épaisseur de film et des données de distribution de pores, et dans lequel les données de distribution de pores comprennent le nombre de pores et la taille de pores.

6. Système selon la revendication 4, dans lequel la pluralité de données de série temporelle comprend le temps de stockage, la température et l'humidité relative associés à l'environnement de stockage du produit à emballer.

7. Un ou plusieurs supports de stockage d'informations lisibles par machine non transitoires comprenant une ou plusieurs instructions qui, lorsqu'elles sont exécutées par un ou plusieurs processeurs matériels, amènent :
la réception d'une pluralité de données de séries temporelles relatives à un environnement de stockage d'un produit à emballer et d'une pluralité de données d'emballage invariantes dans le temps comprenant une pluralité de paramètres de conception d'emballage à atmosphère modifiée (MAP),
la prédiction d'une pluralité de vecteurs temporels associés à la pluralité de données de séries temporelles à l'aide d'une couche de réseau neuronal à mémoire à court terme long (LSTM) ;
le calcul d'une pluralité de vecteurs de conception sur la base de la pluralité de données d'emballage invariantes dans le temps à l'aide d'une pile de réseau neuronal artificiel (ANN) à deux couches ;
la génération de vecteurs de prédiction concaténés sur la base de la pluralité de vecteurs temporels et de la pluralité de vecteurs de conception à l'aide d'une couche de concaténation ;
la prédiction d'une durée de conservation du produit à emballer sur la base des vecteurs de prédiction concaténés à l'aide d'une couche dense ; et
le calcul d'une pluralité de paramètres de conception d'emballage à atmosphère modifiée (MAP) optimaux pour une durée de conservation maximale sur la base de la durée de conservation prédite du produit et de paramètres de stockage environnementaux à l'aide d'un algorithme d'optimisation bayésienne.

8. Un ou plusieurs supports de stockage d'informations lisibles par machine non transitoires selon la revendication 7, dans lequel la pluralité de paramètres de conception MAP comprend une perméabilité à des gaz tels que l'oxygène (O2), le dioxyde de carbone (CO2) et l'eau (H2O), une épaisseur de film et des données de distribution de pores, et dans lequel les données de distribution de pores comprennent le nombre de pores et la taille de pores.

9. Un ou plusieurs supports de stockage d'informations lisibles par machine non transitoires selon la revendication 7, dans lequel la pluralité de données de séries temporelles comprend le temps de stockage, la température et l'humidité relative associés à l'environnement de stockage du produit à emballer.
